(19)

Europäisches Patentamt

European Patent Office

Office européen des brevets

(11)  **EP 4 737 935 A1**

(12)  **EUROPEAN PATENT APPLICATION**

(43) Date of publication:
06.05.2026  Bulletin 2026/19

(21) Application number: 24209651.9

(22) Date of filing: 29.10.2024

(51) International Patent Classification (IPC):
*G01S 7/02* (2006.01)   *G01S 7/40* (2006.01)
*G01S 13/34* (2006.01)   *G01S 13/87* (2006.01)
*G01S 13/931* (2020.01)

(52) Cooperative Patent Classification (CPC):
G01S 13/931; G01S 7/023; G01S 7/0235;
G01S 7/4008; G01S 13/343; G01S 13/87

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: NXP B.V.
5656 AG Eindhoven (NL)

(72) Inventors:
• LOK, Pieter
5656AG Eindhoven (NL)
• WICHERN, Andreas Hans Walter
5656AG Eindhoven (NL)
• JANSEN, Feike Guus
5656AG Eindhoven (NL)

• FREIDL, Philipp Franz
5656AG Eindhoven (NL)
• MIDDELINK, Marc Klein
5656AG Eindhoven (NL)
• BEKOOIJ, Marco Jan Gerrit
5656AG Eindhoven (NL)

(74) Representative: Hardingham, Christopher Mark
NXP Semiconductors
Intellectual Property Group
The Cattle Barn
Upper Ashfield Farm, Hoe Lane
Romsey, Hampshire SO51 9NJ (GB)

Remarks:
Amended claims in accordance with Rule 137(2)
EPC.

(54)  **DISTRIBUTED COHERENT RADAR SYSTEMS WITH DIGITALLY CONTROLLED LOCAL OSCILLATORS**

(57)  Aspects of this disclosure are directed to various circuit topologies for mitigating coupling. In some embodiments, an amplifier circuit is provided that includes a first amplifier path, a second amplifier path, and a capacitor. The first amplifier path may include a first input, a first transistor, and a first wire coupled between the first input and a first terminal of the first transistor. The second amplifier path may include a second input, a second transistor, and a second wire coupled between the second input and a first terminal of the second transistor. The capacitor may include a first terminal coupled to the first input and a second terminal coupled to the second input. Under such an arrangement, the capacitor may be configured to compensate for a coupling between the first wire and the second wire. Other embodiments are disclosed.

Fig. 2

EP 4 737 935 A1

## Description

FIELD OF THE DISCLOSURE

The present disclosure relates to distributed radar systems, and radar units therefor.

BACKGROUND

A distributed radar is one in which two or more individual units, commonly referred to as radar units or radar heads, are used as part of a single radar. A distributed coherent radar (DCR) system requires synchronization in time, frequency and phase between the individual radar units. Such synchronization is typically achieved or enabled by use of a master clock with a single oscillator, typically provided by a central processor or zonal processor unit, to each of the distributed radar units. Alternatively, the master clock may be provided by one of the radar units or heads, with a wired connection to the other radar units to distribute the clock signal.

SUMMARY

According to a fist aspect of the present disclosure, there is provided a radar unit for use in a distributed coherent, DCR, automotive radar system, the radar unit comprising: a local clock circuit, comprising: an oscillator; and a digital turning circuit in parallel with the oscillator and comprising a plurality of switchable capacitors; a tuning controller configured to adjust an operating frequency of the local clock circuit, by controlling the plurality of switchable capacitors within a non-transmit period of operation of the radar unit; and a communication unit configured to transmit and receive data from a central processor unit; wherein the tuning controller is configured to adjust the operating frequency of the local clock circuit, in response to the communication unit receiving a frequency offset data from the central processor unit, to reduce a frequency difference between operating frequency of the local clock circuit and a remote clock circuit of the DCR automotive radar system.

A DCR automotive radar system using such a radar unit may be able to operate with a low tolerance oscillator and clock in a zonal or central processor, and may avoid a requirement for direct communication between multiple radar heads.

In one or more embodiments, the communication unit is further configured to transmit an own frequency offset data to the central processor unit. The central processor unit may therefore act as a "central clearing house" by collecting the frequency offset data from each of the radar units, and distributing this to each of the other units.

In one or more embodiments, the non-transmit period of operation is a period between transmission of successive sequences of chirps.

In one or more embodiments the communication unit is configured to communicate data with the central processor unit by means of an ethernet communication protocol. Ethernet communication protocols are widely used, and particularly convenient providing for packet-based communication; however the present disclosure is not limited thereto, and other communication protocols, such as control area networks (CAN) may be used in the alternative

In one or more embodiments, the radar unit may be further configured to determine the own frequency offset by a Precision Time Protocol.

In one or more such embodiments, the radar unit may be configured to implement the Precision Time Protocol by determining a rate-ratio between the clock circuit and the remote clock circuit.

According to a second aspect of the present disclosure, there is provided a distributed coherent radar system for automotive applications, comprising a radar unit as described above; a further radar unit; and a central processor unit configured to communicate with each of the radar unit and the further radar unit.

According to such an aspect, a direct link between the radar unit and the further radar unit may not be necessary. And, moreover, it may be possible to use local clocks in each of the radar units and still provide a distributed coherent radar system. The system may include two or more radar units.

In one or more embodiments, the central processor unit comprises a central processor oscillator, and a central communication unit. In some embodiments, the central processor oscillator is part of a clock circuit, and may have a lower precision (that is to say a wider range of possible values for any given nominal value) than the oscillators of the radar units.

In one or more such embodiments, the central processor unit comprises the remote clock circuit.

In one or more other embodiments, the further radar unit comprises the remote clock circuit.

In one or more such embodiments, the further radar unit is a radar unit such as has been described above. That is to say, the radar units or radar heads may all be similar and in such embodiments it may not be necessary to include a leader radar head and follow-up radar heads.

In one or more embodiments, the frequency offset is the difference between own frequency offset of the radar unit and an own frequency offset of the further radar unit.

In one or more embodiments, the first radar unit and the further radar unit are configured to reduce an operating frequency difference therebetween to zero. The frequencies of the two radar units may thus become equalized. In one or more embodiments the own frequency offset of the first radar unit is equal to the own frequency offset of the further radar unit, and each are non-zero. Thus the operating frequencies of the two radar unit may be different from that of the central or zonal processor.

According to a further aspect of the present invention, there is provide method of operating a radar unit in a distributed coherent, DCR, automotive radar system, the radar unit including: a local clock circuit, having an oscillator and a digital turning circuit, in parallel with the oscillator and comprising a plurality of switchable capacitors; a tuning controller configured to adjust an operating frequency of the local clock circuit, by controlling the plurality of switchable capacitors within a non-transmit period of operation of the radar unit; and a communication unit configured to transmit and receive data from a central processor unit; the method comprising: receiving, by the communication unit, a frequency offset data from the central processor unit, in response thereto adjusting, by the tuning controller, the operating frequency of the local clock circuit, thereby reducing a frequency difference between operating frequency of the local clock circuit and a remote clock circuit of the DCR automotive radar system.

In one or more embodiments, the communication unit is further configured to transmit an own frequency offset data to the central processor unit.

In one or more embodiments, the non-transmit period of operation is a period between transmission of successive sequences of chirps.

In one or more embodiments, the communication unit communicates data with the central processor unit by means of an ethernet communication protocol.

In one or more embodiments the method further comprises determining the own frequency offset by a Precision Time Protocol.

In one or more such embodiments implementing the Precision Time Protocol is by determining a rate-ratio between the clock circuit and the remote clock circuit.

BRIEF DESCRIPTION OF THE DRAWINGS

Reference will now be made to the accompanying drawings, which are not necessarily drawn to scale, and wherein:

FIG. 1 illustrates, schematically, a distributed coherent radar (DCR) system;
FIG. 2 illustrates, schematically, a DCR system, according to one or more embodiments;
FIG. 3A, illustrates, schematically, the operating frequencies of three oscillators such as crystal oscillators;
FIG. 3B shows, again schematically, the oscillators in FIG. 3A, and illustrates a frequency offset between the natural oscillation frequency of the oscillators; and
FIG. 4A and FIG. 4B show, schematically, tuning of the local oscillators to reduce or eliminate a frequency offset.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

DETAILED DESCRIPTION

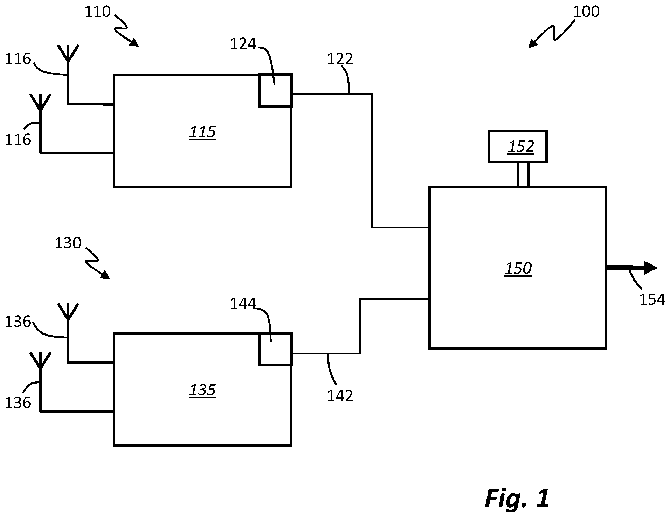

FIG. 1 illustrates, schematically, a distributed coherent radar (DCR) system 100. The DCR system 100 comprises a plurality of radar units. In the example shown, there is a first radar unit 110 and a second radar unit 130. Other DCR systems may have more than two radar units. The radar units may also be referred to as radar heads. In other configurations, a radar head may be part of a radar unit. For example, radar head 115 may be an integrated circuit, and the integrated circuit may be part of radar unit 110. In such configurations, the radar unit may include other components, such as a plurality of antennas, which will be described in more detail hereinbelow. In other configurations, the radar head may be considered to include the antennas. The DCR system also comprises a central processor unit 150. In some DCR systems, the central processor unit 150 may also be referred to as a zonal processor.

Each radar unit 110, 130 includes a plurality of antennas, 116, 136 respectively. As shown, each radar head may have two antennas; alternatively the radar head may have more than two antennas. Each of the antennas 116 may be a receive antenna, a transmit antenna or may be configured to operate as both a receive and a transmit antenna.

The system illustrated in FIG. 1 is a distributed radar system since the antennas are distributed between a plurality of radar heads or radar units 110 and 130. In order to operate as a coherent distributed radar system, the signals transmitted from each of the radar units have to be synchronous, or have a well-defined relationship, in frequency and phase. In conventional DCR systems, this is achieved by having a single master clock 152, which typically may be part of the zonal processor 150. The clock signal is distributed from the zonal processor to each of the radar units of radar heads 110 and 130, in order to ensure that the signal is transmitted from the antennas 116 and 136 are coherent, that is to say, they have a well-defined relationship in both frequency and phase. Alternatively, although not generally preferred, the single master clock 152 may be part of one of the radar heads 110 or 130. In this case, the frequency and phase of the master clock and must be communicated to the other radar heads 110 or 130, resulting in an asymmetric system.

Distributed coherent radar systems such as that shown in FIG. 1 may be used to detect targets with an improved angular resolution. In order to achieve the improved angular resolution, data captured by each of the radar heads is sent, for example over an ethernet connection 122, 142, to the central processor unit 150, where it is processed together. The central processor unit 150 may, for example determine a list of potential radar targets or objects 154, and send these to the user of the radar, for example an advanced assistive driving system. Each radar unit 110, 130 includes a communication unit, 124, 144 respectively, for communicating with the central processor 150 over communication channels 122, 142 respectively.

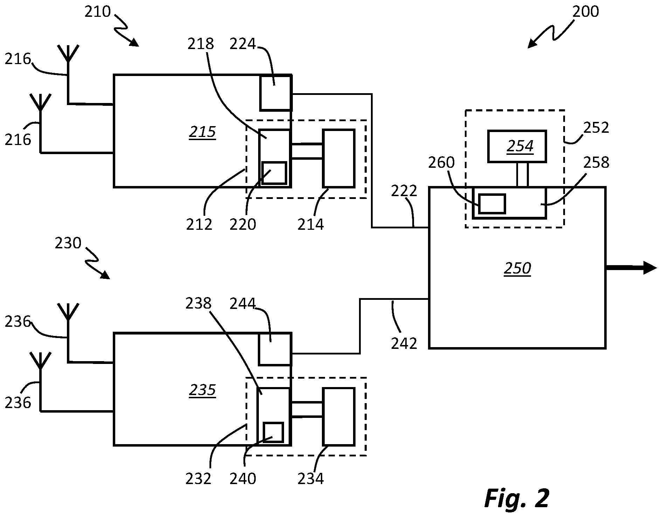

FIG. 2 illustrates, schematically, a distributed coherent radar (DCR) system 200, according to one or more embodiments. The DCR system 200 comprises a plurality of radar units, which may be, as in the example shown, a first radar unit 210 and a second radar unit 230. There may be more than two radar units, or radar heads. In other configurations, a radar head, which may also, in some embodiments, be referred to as a transceiver, may be part of a radar unit. For example, radar head 215 may be an integrated circuit, and the integrated circuit may be part of radar unit 210. In such configurations, the radar unit may include other components, such as an oscillator and a plurality of antennas, which will be described in more detail hereinbelow. In some configurations, the radar head, is a transceiver, and may be considered to include the oscillator and antennas. The DCR system also comprises a central processor unit 150. In some DCR systems, the central processor unit 230 may also be referred to as a zonal processor.

Each radar unit 210, 230 includes a plurality of antennas, 216, 236 respectively. As shown, each radar head may have two antennas; alternatively, the radar head may have more than two antennas. Each of the antennas 216, 226 may be a receive antenna, a transmit antenna or may be configured to operate as both a receive and a transmit antenna.

Each radar unit 210, 230 comprises a local clock circuit, 212, 232 respectively. Each local clock circuit comprises an oscillator 214, 234, respectively, which may be for instance a crystal oscillator. The oscillator may be integral in the radar head 215, 235, or may, as shown, be a separate component. Each local clock circuit 212, 232 respectively includes a digital tuning circuit 218, 238 respectively. As will be described in more detail hereinbelow, the digital tuning circuit 218, 238 is able to adjust or tune the frequency of the local clock circuit. The digital tuning circuit is electrically in parallel with the oscillator, and comprises a capacitor bank, having a plurality of switchable capacitors. The tuning circuit is operable to adjust an operating frequency of the local clock circuit such that it differs from the natural oscillation frequency of the oscillator. The oscillator, in combination with the digital tuning circuit may be described as a digitally tunable oscillator, or in the case of a crystal oscillator as a digitally controlled crystal oscillator (DCXO).

Each local clock circuit 212, 232 further comprises a tuning controller 220, 240. Each tuning controller is configured to adjust an operating frequency of the local clock circuit, by controlling the digital tuning circuit. The tuning controller is configured to put into effect the control, such that the tuning occurs during a non-transmit period of operation of the radar unit. In particular, each radar unit typically transmits a series of "chirps", or linear frequency modulated (LFM) signals, which are reflected from one or more objects in the field of view of the radar system. Between each series of chirps is typically a gap, which may be referred to as a non-transmit time or non-transmit period. Thus the radar head operates with a transmit period followed by non-transmit period. Adjusting the frequency of the local clock circuit during a transmit period could result in disruption or impairment of the performance of the radar head. In particular, it could impair estimating the range or distance of a target from the radar head, since this estimation is primarily based on a frequency of the received signal and in specifically the time interval (corresponding to a round-trip time) between the signal at a particular frequency being received, and the transmission of the part of the LFM signal which is at that frequency. The skilled person will understand that adjusting the local clock frequency during such a transmit period of operation could significantly interfere with the range measurement. The adjustment is thus made within a non-transmit period.

Each radar unit 210, 230 further comprises a communication unit, 224, 244 respectively, which is configured to transmit and receive data from the central processor unit 250, for example over an ethernet connection 222, 242. According to embodiments of the present disclosure, the communication unit receives data relating to a frequency offset between the operating frequency of the local clock circuit, and an operating frequency of a remote clock circuit of the system. For example, and without limitation, the communication unit may receive data indicative of a difference between the operating frequency of the local clock circuit 212, and that of a corresponding clock circuit 232 of the second radar unit 230. In response to the communication unit 124 receiving such data, which may also be referred to as a frequency offset data, from the central processor, the tuning controller may adjust the operating frequency of the local clock circuit, to reduce the frequency difference or frequency offset, again as will be described in more detail hereinbelow. The central processor unit 250 generally includes a clock circuit 252, having an oscillator 254, and which may or may not include a tuning circuit 258 and tuning controller 260

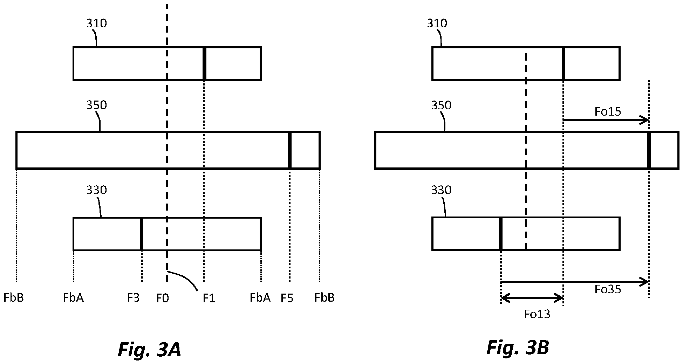

Turning to FIG. 3A, this illustrates, schematically, the operating frequencies of three oscillators, which may be crystal oscillators. Two of the oscillators, 310 and 330 respectively, may be, for example, relatively high precision oscillators for use in radar units 210 and 230. The other oscillator shown, 350, may be a relatively low precision oscillator for use in the central processor unit 250. All three oscillators have the same nominal natural oscillation frequency F0, 342, under nominal standard operating conditions. However, the skilled person will be aware that, to manufacturing tolerances, the actual natural oscillation frequency of each oscillator may be different from the nominal frequency F0. This is shown schematically by the frequencies F1, F3 and F5. Moreover, the operating frequency will typically vary with operating conditions, in particular with temperature and applied voltage. Furthermore, since oscillators 310 and 330 are high precision oscillators, the actual natural oscillation frequency of these oscillators, F1 and F3 respectively a specified range of the nominal oscillation frequency F0, as depicted by the frequency bounds FbA. Conversely, oscillator 350 is a low precision oscillator, so the actual natural oscillation frequency of this oscillator may deviate further from the nominal oscillation frequency F0. The actual natural frequency of oscillator 350, shown at F5, only has to be within the frequency bounds FbB, which, as can be seen, is a looser constraint than the constraint FbA on the frequencies of oscillators 310 and 330.

FIG. 3B shows, again schematically, the same three oscillators 310, 330 and 350 as depicted in FIG. 3a, but this time illustrates frequency offsets between the natural oscillation frequencies of the oscillators. The natural oscillation frequency of oscillator 310 differs from that of the central processor oscillator 350 by a frequency offset Fo15; the natural oscillation frequency of oscillator 330 differs from that of the central processor oscillator 350 by a frequency offset Fo35, and the natural oscillation frequency of oscillator 310 differs from that of the oscillator 330 by a frequency offset Fo13. It will be noted that, due to the lower tolerance of the central processor oscillator 350, either or both of the offsets Fo15 and Fo35 may be larger than the maximum possible value of offset Fo13.

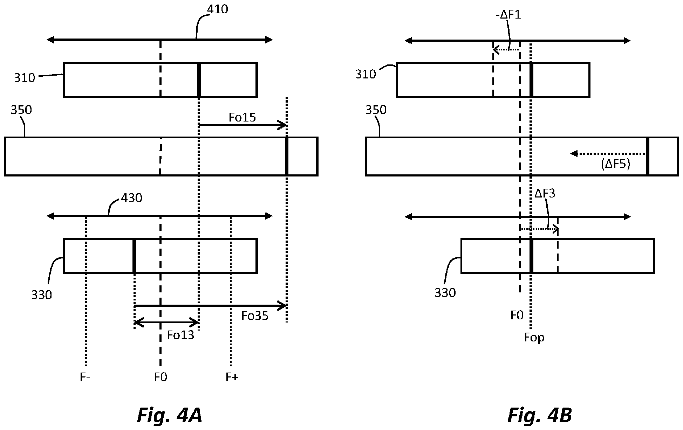

Turning now to FIG. 4A and FIG. 4B, these show, schematically, tuning of the local oscillators to reduce, and in this case eliminate, a frequency offset. FIG. 4A shows the same three oscillators 310, 330 and 350 depicted in FIG. 3A, but includes tuning ranges 410 and 430 for oscillators 310 and 330. As mentioned above, the tuning may be implemented by means of a digital tuning circuit, which may comprise a plurality of switchable capacitors. Switching one or more of the capacitors in parallel with the crystal oscillator modifies the resonance frequency of the oscillator, in one or other direction, depending on whether the total capacitance is more or less than a nominal design capacitance. The skilled person will appreciate that although the tuning ranges 410, 430 are depicted as solid lines suggesting continuous tunability, in practice the tuning is by a series of steps, dependent on the capacitance value connected in parallel with the crystal oscillator. The digital tuning circuit allows the nominal frequency of oscillation to be changed within a range from F- to F+, as shown.

FIG. 4B illustrates how the frequency offset Fo13 between oscillators 310 and 330 may be reduced to 0. In this particular example, the frequencies of both oscillators 310 and 330 are modified by tuning. Oscillator 310 is tuned to modify its operating frequency by $-\Delta F1$ (that is to say the frequency is decreased), and oscillator 330 is tuned to increase its operating frequency by $\Delta F3$. By suitable choice of the tuning, and specifically ensuring that:

$$\Delta F3 - \Delta F1 = Fo13,$$

or in the case of tuning in "opposite" directions such that the frequency of one oscillator is increased and the frequency of the other oscillator is decreased:

$$|\Delta F3| + |\Delta F1| = Fo13$$

it may be arranged that the frequency offset between the actual operating offset between the oscillators may be reduced to 0.

FIG. 4B also shows oscillator 350, which forms part of a local clock for the zonal processor or central processor unit 250. This oscillator may be a low precision oscillator, such that its actual natural frequency may be further from the nominal natural frequency. As a result, it may occur that, even when that oscillator is tuned to the end of its tuning range (in other words the nominal frequency is reduced from by $\Delta F5$ from F0 to F-), it is not possible to eliminate the frequency offset between either or both of the oscillators 310 and 330, and the low precision oscillator 350. In one or more embodiments of the present disclosure, the tuning is applied to one or more of the oscillators of the radar units only, and is not applied to the oscillator of the central processor unit 250. By directly aligning the frequencies of the radar units, independently of the oscillator of the central processor unit, it may be possible to relax the tolerance on the oscillator in the central processor unit, thereby potentially decreasing costs of the system.

Returning to FIG. 2, it will be appreciated that according to the present disclosure, there is no requirement for a direct communication link between the individual radar units 210 and 230. In particular, a frequency offset Fo13 between radar units 210 and 230 may be determined, by separately determining the frequency offset Fo15 between the respective oscillators of radar unit 210 and the central processor unit 250, and the frequency offset Fo35 between the respective oscillators of radar unit 230 and central processor unit 250. The offset between the two radar units is then simply given by:

$$Fo13 = Fo15 - Fo35.$$

Methods to reduce the offset between the clocks of the multiple processes in a network are well known in the literature. One such method is the so-called precision time protocol (PTP) which operates by exchanging time-stamped packets over the network (for instance by ethernet). Each local clock employs a rate-ratio counter in order to measure its offset from a master clock, which in this case may be the clock of the central processor unit 250. To provide sufficient accuracy for applications such as automotive DCR systems, a large number of timestamps required to be exchanged. Since over the measurement period, the frequency of one or more of the clocks may slightly change, a long-term average of the frequency difference may be employed.

By now it will have been appreciated that a method has been disclosed to obtain a clock signal for each radar head which has a sufficiently small frequency difference with the clock in the other radar without increasing the phase-noise. Digitally controllable crystal oscillators (DCXOs) may be used to tune the clock frequency of the crystals such that the frequency difference between the radar heads is reduced, minimized or even eliminated. The use of DCXOs does not introduce additional phase-noise because a DCXO is typically a digitally controllable capacitor bank which is placed in parallel with the crystal.

Furthermore, the settings of the DCXO need be adapted only during a time-interval in which the radar heads do not transmit, to avoiding changes in the frequency from impair the estimation performance of the radar head. This time-interval is typically sufficiently long, of the order of several ms, which is sufficient to settle frequency changes before the next chirp-train is transmitted by the radar heads.

The frequency settings of the DCXO may be derived from the frequency-offset between the crystal clock frequency of the radar heads. The estimated frequency offset may be long term average frequency difference which can be estimated in several ways. One such way to estimate the frequency difference is by using the so-called rate-ratio counters in the Precision Timed Protocol (PTP) protocol that runs on a packet-based communication link with the Zonal processing unit. This is described, for instance, in the IEEE 802.1 A specification

Since a DCXO can only typically achieve a limited frequency tuning range, it may be required to use high-precision (small frequency tolerance) crystals in the radar heads. However, the Zonal processing unit to which the communication links are connected, may have less accurate (that is to say, wider tolerance) crystals. Therefore, tuning of the crystal frequency of each radar heads to match the clock frequency of the central processor unit might not be possible. Thus, it is disclosed herein to tune the clock frequency of one radar directly to the frequency of the other radar head instead of towards the clock frequency of the Zonal processing unit.

Furthermore, the use of a DCXO in each radar head is also disclosed. A DCXO in each radar head allows the use of crystals with a wider tolerance compared to the use of a single DCXO in just one radar head.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Although specific embodiments have been illustrated and described herein, it should be appreciated that any arrangement calculated or constructed to achieve the same or a similar purpose may be substituted for the specific embodiments shown. This disclosure is intended to cover any and all adaptations or variations of various embodiments. Combinations of the above embodiments, and other embodiments not specifically described herein, are contemplated by the subject disclosure.

For instance, one or more features or aspects from one or more embodiments can be combined with one or more features or aspects of one or more other embodiments. In one or more embodiments, features that are positively recited can also be negatively recited and excluded from the embodiment with or without replacement by another structural and/or functional feature. The steps or functions described with respect to the embodiments of the subject disclosure can be performed in any order. The steps or functions described with respect to the embodiments of the subject disclosure can be performed alone or in combination with other steps or functions of the subject disclosure, as well as from other embodiments or from other steps that have not been described in the subject disclosure. Further, more than or less than all of the features described with respect to an embodiment can also be utilized.

Less than all of the steps or functions described with respect to the exemplary processes or methods can also be performed in one or more of the exemplary embodiments. Further, the use of numerical terms to describe a device, component, step or function, such as first, second, third, and so forth, is not intended to describe an order or function unless expressly stated so. The use of the terms first, second, third and so forth, is generally to distinguish between devices, components, steps or functions unless expressly stated otherwise. Additionally, one or more devices or components described with respect to the exemplary embodiments can facilitate one or more functions, where the facilitating (e.g., facilitating access or facilitating establishing a connection) can include less than every step needed to perform the function or can include all of the steps needed to perform the function.

The Abstract of the Disclosure is provided with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

**Claims**

1. A radar unit for use in a distributed coherent, DCR, automotive radar system, the radar unit comprising:

   a local clock circuit, comprising:

   an oscillator; and
   a digital turning circuit in parallel with the oscillator and comprising a plurality of switchable capacitors;

   a tuning controller configured to adjust an operating frequency of the local clock circuit, by controlling the plurality of switchable capacitors within a non-transmit period of operation of the radar unit; and
   a communication unit configured to transmit and receive data from a central processor unit;
   wherein the tuning controller is configured to adjust the operating frequency of the local clock circuit, in response to the communication unit receiving a frequency offset data from the central processor unit, to reduce a frequency difference between operating frequency of the local clock circuit and a remote clock circuit of the DCR automotive radar system.

2. The radar unit according to claim 1, wherein the communication unit is further configured to transmit an own frequency offset data to the central processor unit.

3. The radar unit according to claim 1 or 2, wherein the non-transmit period of operation is a period between transmission of successive sequences of chirps.

4. The radar unit according to any preceding claim, wherein the communication unit is configured to communicate data with the central processor unit by means of an ethernet communication protocol.

5. The radar unit according to any preceding claim, further configured to determine the own frequency offset by a Precision Time Protocol.

6. The radar unit according to claim 5, wherein the radar unit is configured to implement the Precision Time Protocol by determining a rate-ratio between the clock circuit and the remote clock circuit.

7. A distributed coherent radar system for automotive applications, comprising

   the radar unit as claimed in any preceding claim, being a first radar unit;
   a further radar unit;
   and a central processor unit configured to communicate with each of the radar unit and the further radar unit.

8. The distributed coherent radar system of claim 7, wherein the central processor unit comprises a central processor oscillator, and a central communication unit.

9. The distributed coherent radar system of claim 8 wherein the central processor unit comprises the remote clock circuit.

10. The distributed coherent radar system of claim 7 or 8, wherein the further radar unit comprises the remote clock circuit.

11. The distributed coherent radar system according to claim 10, wherein the further radar unit is a radar unit according to any of claims 1 to 6.

12. The distributed coherent radar system according to claim 10 or 11, wherein the frequency offset is the difference between own frequency offset of the first radar unit and an own frequency offset of the further radar unit.

13. The distributed coherent radar system according to claim 12, wherein the first radar unit and the further radar unit are configured to reduce an operating frequency difference therebetween to zero.

14. The distributed coherent radar system according to claim 13, wherein the own frequency offset of the first radar unit is equal to the own frequency offset of the further radar unit, and each are non-zero.

15. A method of operating a radar unit in a distributed coherent, DCR, automotive radar system, the radar unit including: a local clock circuit, having an oscillator and a digital turning circuit, in parallel with the oscillator and comprising a plurality of switchable capacitors; a tuning controller configured to adjust an operating frequency of the local clock circuit, by controlling the plurality of switchable capacitors within a non-transmit period of operation of the radar unit; and a communication unit configured to transmit and receive data from a central processor unit; the method comprising:

    receiving, by the communication unit, a frequency offset data from the central processor unit,
in response thereto adjusting, by the tuning controller, the operating frequency of the local clock circuit,
thereby reducing a frequency difference between operating frequency of the local clock circuit and a remote clock circuit of the DCR automotive radar system.

**Amended claims in accordance with Rule 137(2) EPC.**

1. A radar unit (110) for use in a distributed coherent, DCR, automotive radar system, the radar unit comprising:

    a local clock circuit (212), comprising:

        an oscillator (214); and
a digital turning circuit (218) in parallel with the oscillator and comprising a plurality of switchable capacitors;

    a tuning controller (220) configured to adjust an operating frequency of the local clock circuit, by controlling the plurality of switchable capacitors within a non-transmit period of operation of the radar unit; and
a communication unit (224) configured to transmit and receive data from a central processor unit;
wherein the tuning controller is configured to adjust the operating frequency of the local clock circuit, in response to the communication unit receiving a frequency offset data from the central processor unit, to reduce a frequency difference between operating frequency of the local clock circuit and a remote clock circuit (232, 252) of the DCR automotive radar system.

2. The radar unit according to claim 1, wherein the communication unit is further configured to transmit an own frequency offset data to the central processor unit.

3. The radar unit according to claim 1 or 2, wherein the non-transmit period of operation is a period between transmission of successive sequences of chirps.

4. The radar unit according to any preceding claim, wherein the communication unit is configured to communicate data with the central processor unit by means of an ethernet communication protocol.

5. The radar unit according to any preceding claim, further configured to determine the own frequency offset by a Precision Time Protocol.

6. The radar unit according to claim 5, wherein the radar unit is configured to implement the Precision Time Protocol by determining a rate-ratio between the clock circuit and the remote clock circuit.

7. A distributed coherent radar system for automotive applications, comprising

    the radar unit as claimed in any preceding claim, being a first radar unit;
a further radar unit (230);
and a central processor unit (250) configured to communicate with each of the radar unit and the further radar unit.

8. The distributed coherent radar system of claim 7, wherein the central processor unit comprises a central processor oscillator (254), and a central communication unit.

9. The distributed coherent radar system of claim 8 wherein the central processor unit comprises the remote clock circuit.

10. The distributed coherent radar system of claim 7 or 8, wherein the further radar unit comprises the remote clock circuit.

11. The distributed coherent radar system according to claim 10, wherein the further radar unit is a radar unit according to any of claims 1 to 6.

12. The distributed coherent radar system according to claim 10 or 11, wherein the frequency offset is the difference between own frequency offset of the first radar unit and an own frequency offset of the further radar unit.

13. The distributed coherent radar system according to claim 12,
wherein the first radar unit and the further radar unit are configured to reduce an operating frequency difference therebetween to zero.

14. The distributed coherent radar system according to claim 13,
wherein the own frequency offset of the first radar unit is equal to the own frequency offset of the further radar unit, and each are non-zero.

15. A method of operating a radar unit in a distributed coherent, DCR, automotive radar system, the radar unit including: a local clock circuit (212), having an oscillator (214) and a digital turning circuit (218), in parallel with the oscillator and comprising a plurality of switchable capacitors; a tuning controller (220) configured to adjust an operating frequency of the local clock circuit, by controlling the plurality of switchable capacitors within a non-transmit period of operation of the radar unit; and a communication unit (224) configured to transmit and receive data from a central processor unit (250);
the method comprising:

   receiving, by the communication unit, a frequency offset data from the central processor unit,
   in response thereto adjusting, by the tuning controller, the operating frequency of the local clock circuit,
   thereby reducing a frequency difference between operating frequency of the local clock circuit and a remote clock circuit of the DCR automotive radar system.

Fig. 1

**Fig. 2**

**Fig. 3A**

**Fig. 3B**

**Fig. 4A**

**Fig. 4B**

Europäisches
Patentamt

European
Patent Office

Office européen
des brevets

# EUROPEAN SEARCH REPORT

**Application Number**

EP 24 20 9651

## DOCUMENTS CONSIDERED TO BE RELEVANT

| Category | Citation of document with indication, where appropriate, of relevant passages | Relevant to claim |
|---|---|---|
| Y | CN 221 633 727 U (CALTERAH SEMICONDUCTOR TECH SHANGHAI CO LTD) 30 August 2024 (2024-08-30) * paragraphs [0003], [0033], [0050], [0065], [0068], [0069], [0007], [0075], [0077]; figures 1,6 * ----- | 1-15 |
| Y | EP 4 155 755 A1 (VEONEER SWEDEN AB [SE]) 29 March 2023 (2023-03-29) * paragraphs [0035], [0036], [0038] – [0040], [0050], [0069]; figures 1-4 * ----- | 1-15 |

**CLASSIFICATION OF THE APPLICATION (IPC)**

INV.
G01S7/02
G01S7/40
G01S13/34
G01S13/87
G01S13/931

**TECHNICAL FIELDS SEARCHED (IPC)**

G01S

The present search report has been drawn up for all claims

| Place of search | Date of completion of the search | Examiner |
|---|---|---|
| Munich | 10 April 2025 | Metz, Carsten |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 20 9651

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | | Publication date | Patent family member(s) | | Publication date |
|---|---|---|---|---|---|
| CN 221633727 | U | 30-08-2024 | NONE | | |
| EP 4155755 | A1 | 29-03-2023 | CN | 117999493 A | 07-05-2024 |
| | | | EP | 4155755 A1 | 29-03-2023 |
| | | | US | 2024402286 A1 | 05-12-2024 |
| | | | WO | 2023046828 A1 | 30-03-2023 |

EPO FORM P0459

For more details about this annex : see Official Journal of the European Patent Office, No. 12/82